# EUROPEAN PATENT APPLICATION

(11) **EP 4 218 662 A1**
(43) Date of publication of application: **02.08.2023**
(21) Application number: 23153657.4
(22) Date of filing: 27.01.2023
(51) Int. Cl.: A61C 8/00

(54) **SYSTEM FOR ORAL IMPLANTOLOGY**

(30) Priority: 01.02.2022 IT 202200001688
(71) Applicant: B. & B. Dental S.r.l., 40018 San Pietro in Casale (BO) (IT)
(72) Inventor: DAMIANO, Maurizio, 40018 SAN PIETRO IN CASALE (BO) (IT); BANZI, Simone, 40018 SAN PIETRO IN CASALE (BO) (IT)
(74) Representative: Studio Torta S.p.A.

(57) **Abstract**

A system for oral implantology having: an implant (2) which is integrated, in use, within a bone of a person's oral arch; an abutment (3); and a screw (30);
wherein the implant (2) and the abutment (3) are configured to generate a conical coupling;
wherein said screw (30) connects the implant (2) and the abutment (3); said screw (30) being rotatable around a rotation axis (X") and is configured to:
- push, rotating in a first direction of rotation (v1), said abutment (3) in a first direction of translation (d1), so as to clamp the conical coupling between the abutment (3) and the implant (2); e
- push, rotating in a second direction of rotation (v2), said abutment (3) in a second direction of translation (d2), in particular opposite to said first direction of translation (d1) so as to free the abutment (3) and the implant (2) from the conical coupling.

## Description

### CROSS-REFERENCE TO RELATED APPLICATIONS

This patent application claims priority from Italian Patent Application No. 102022000001688 filed on February 1st, 2022, the entire disclosure of which is incorporated herein by reference.

### TECHNICAL FIELD

The present patent application for invention relates to a system for oral implantology of an improved type, in particular a system for oral implantology of the type also known as a "morse cone."

### PRIOR ART

The term oral implantology is commonly understood as that set of techniques that make use of medical devices (implants) that are surgically inserted into the mandibular or maxillary bone of a patient and are connected with prostheses (abutments and/or dental crowns).

Systems for oral implantology can be divided into the following macro-categories:
- integral connection between abutment and prosthesis, in which the prosthesis is cemented. In this case, for the removal of the prosthesis it is necessary to break the cement;
- mobile connection between abutment and implant, in which the prosthesis is connected to the implant by releasable means such as screws.

Different types of systems for implantology with a mobile connection are known, comprising: an implant, an abutment, a screw and a crown. The implant is surgically inserted into the mandibular bone while the abutment, the screw and the crown are components that are releasably fixed to the implant. Different types of releasable connection between the moving parts and the implant are known, the present patent application refers to systems for implantology of the type generally known as "morse cone". This type of systems involves creating a conical coupling between the implant and the abutment; in particular, the "morse cone"-type connection is configured to fix the implant and abutment together forming a cold weld.

### DESCRIPTION OF THE INVENTION

Mobile systems for implantology provide that the crown has a hole for the passage of a screwdriver (or equivalent instrumentation) to allow the fixing and disassembling of various components. This hole is then generally filled with composite material.

However, to position the hole in less visible areas for aesthetic reasons, it is preferable to angle the hole so that its mouth through the crown faces the inside of the oral cavity. This has the disadvantage of making it difficult for the dentist to access the hole with a consequent reduction of his/her ability to operate. Also, currently known instrumentation is not suitable for use with certain hole angles.

The object of the present invention is to provide a system for oral implantology of the mobile morse cone-type and that allows to overcome the drawbacks described above.

According to the present invention, a system for oral implantology according to what claimed in the appended claims is provided.

### BRIEF DESCRIPTION OF THE DRAWINGS

The invention will now be described with reference to the accompanying drawings, which illustrate a non-limiting example embodiment thereof, wherein:
- Figure 1 schematically illustrates a system for oral implantology according to the present invention in a first operating configuration;
- Figure 2 is similar to Figure 1 and illustrates a system for oral implantology according to the present invention in a second operating configuration;
- Figure 3 is similar to Figure 1 and illustrates a system for oral implantology according to the present invention in a third operating configuration; and

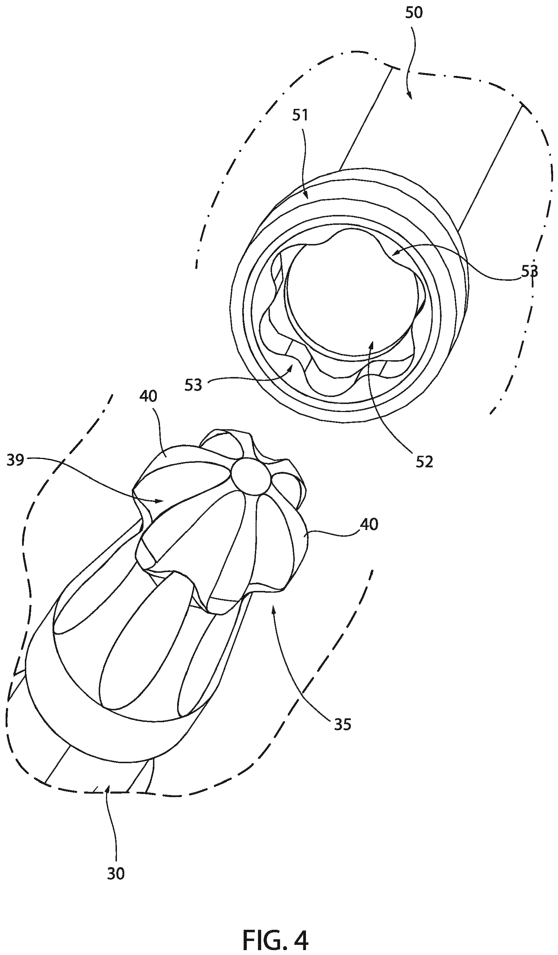

- Figure 4 illustrates in an enlarged scale and with some parts removed for clarity some details of a system for implantology according to the present invention.

### PREFERRED EMBODIMENT OF THE INVENTION

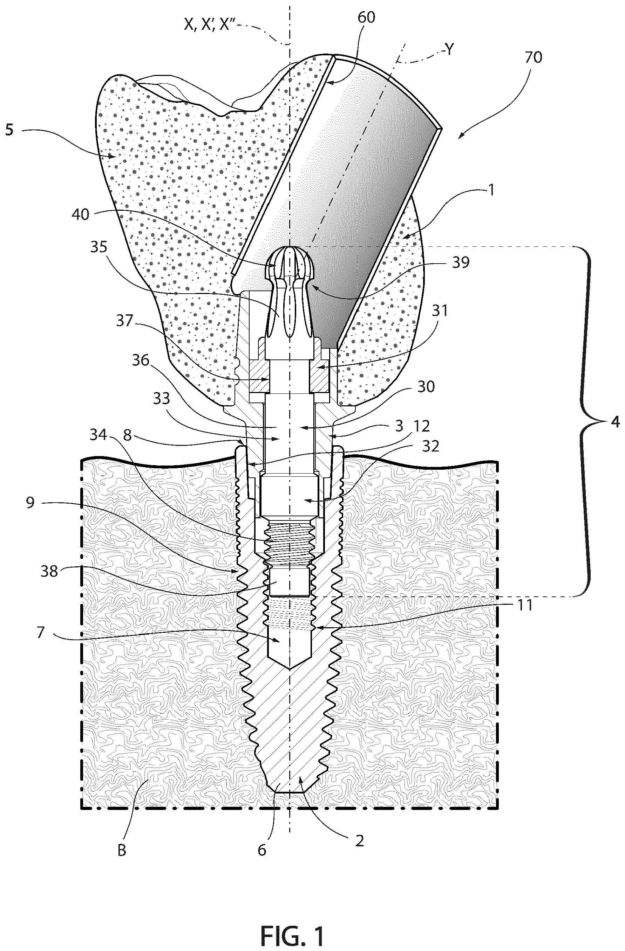

In Figure 1, with reference numeral 1 a system for oral implantology according to the present invention is indicated as a whole.

The system 1 comprises: an implant 2, which is inserted, in use, surgically within the mandibular or maxillary bone B; an abutment 3; a connecting unit 4; and a crown 5.

The implant 2 and the abutment 3 are configured to forma reciprocal conical coupling.

In particular, the implant 2 comprises a body 6 having a cavity 7, which extends along a longitudinal axis X and faces the outside through a proximal mouth 8.

The body 6 comprises, in a known and schematically illustrated manner, anchoring elements 9, which allow to fix the implant 1 to the bone B of the patient.

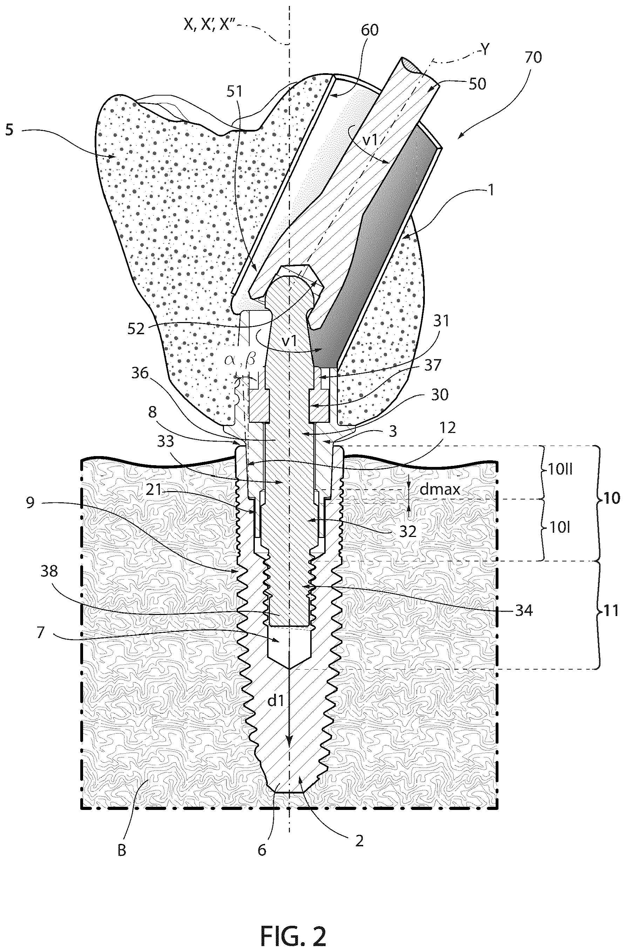

As shown in Figure 2, the cavity 7 is divided longitudinally into an interlocking portion 10 and a screwing portion 11. The interlocking portion 10 is interposed, along the longitudinal axis X, between the screwing portion 11 and the proximal mouth 8.

The interlocking portion 10 is in turn divided along the longitudinal axis X into a shape coupling portion 101 and an interference coupling portion 10II.

The shape coupling portion 10I has a constant section along the longitudinal axis X. By way of example, but not limitation, the section of the shape coupling portion 10I is hexagonal.

The interference coupling portion 10II is configured to form, in use, an interference coupling with the abutment 3. In particular, the interference coupling portion 10II is configured to form a conical-type coupling with the abutment 3. The interference coupling portion 10II is internally delimited by a frusto-conical lateral surface 12 inclined by an angle α with respect to the longitudinal axis X. By way of example and not limitation, the angle α is about 2.5°.

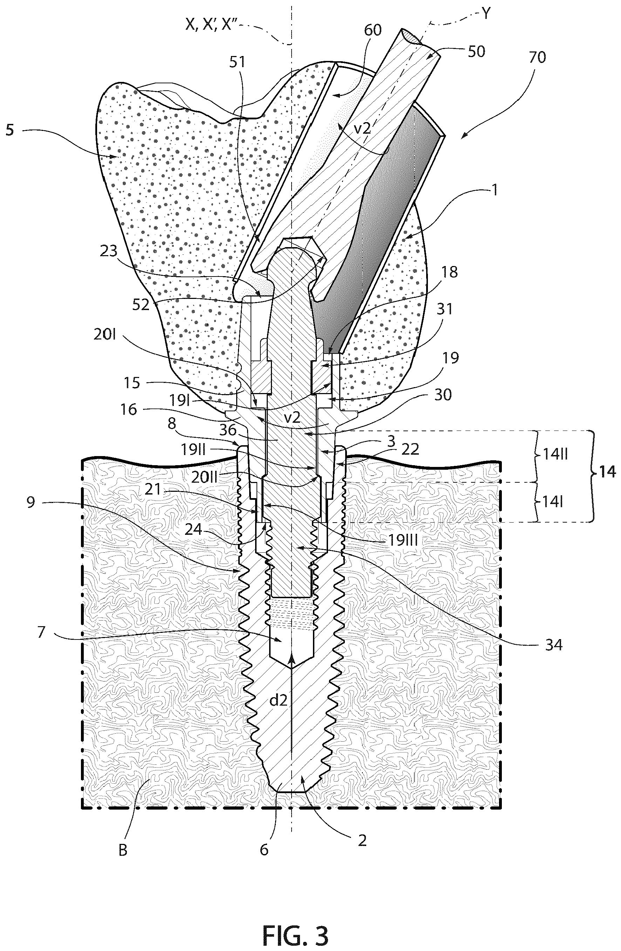

The abutment 3 extends along a longitudinal axis X' and comprises an interlocking element 14 which is in turn divided along the longitudinal axis X' into: a shape coupling element 14I, and an interference coupling element 14II (Figure 3).

The abutment 3 comprises a collar 15 of tubular shape and coaxial to the longitudinal axis X' and a flange 16, which is interposed along the longitudinal axis X' between the collar 15 and the interlocking element 14. The flange 16 protrudes radially outside the collar 15 and is configured to be placed, in use, substantially resting on the patient's gum.

The collar 15 has a lateral mouth 18. The shape and dimensions of the lateral mouth 18 are variable depending on the specific intended use. In particular, the lateral mouth 18 is arranged where the access hole 60 has to be made through the crown 5.

The abutment 3 has a longitudinal hole 19. The hole 19 is divided along the longitudinal axis X' into portions with different sections identified as: proximal portion 19I, central portion 19II, distal portion 19III. The central portion 19II is interposed along the longitudinal axis X' between the proximal portion 19I and the distal portion 19III. The central portion 19II has a section with an area smaller than both the area of the section of the proximal portion 19I and the area of the section of the distal portion 19III.

The abutment 3 has a proximal opening 23, through which the proximal portion 19I faces outwards. The abutment 3 has a distal opening 24, through which the distal portion 19III faces outwards.

Between the proximal portion 19I and the central portion 19II, the abutment 3 has a proximal strike surface 20I. The abutment 3 has a distal strike surface 20II between the central portion 19II and the distal portion 19III. The proximal strike surface 20I and the distal strike surface 20II are transverse to the longitudinal axis X'.

The shape coupling member 14I is configured to be inserted within the shape coupling portion 10I. The shape coupling element 14I is delimited radially outside by a lateral surface 21 having a constant section along the longitudinal axis X'. The lateral surface 21 has a perimeter that is configured to realize a shape coupling with the shape coupling section 10I of the implant 2. By way of example but not limitation, the section of the lateral surface 21 is hexagonal.

The interference coupling member 14II is configured to be inserted within the interference coupling portion 10II so as to fix, in use, the abutment 3 to the implant 2 by interference. The interference coupling element 14II is delimited radially outside by a lateral surface 22, which has a variable section along the longitudinal axis X'. The lateral surface 22 has a frusto-conical shape with respect to the longitudinal axis X' and is inclined by an angle β with respect to the longitudinal axis X'.

The angle β is essentially the same as the angle α. The value of the angles α and β is a function of: the geometry and materials of both the abutment 3 and the implant 2; and of the clamping force to be obtained between the implant 2 and the abutment 3. The angle β according to the illustrated example is approximately 2.5°. Generally the total angle (the width between the inclined edges of the cone) for a "morse cone"-type conical connection is between 3° and 6°. By way of example only, at the conical coupling between the implant 2 and the abutment 3, the clamping force can be about 25 N/cm.

The connecting unit 4 comprises, in turn, a screw 30, a proximal pushing element 31 and a distal pushing element 32.

According to the example illustrated in the figures, the distal pushing element 32 is integral with the screw 30. In other words, the screw 30 and the distal pushing element 32 are part of a single body. This results in a reduction of production costs and overall components of the system 1 with consequent advantages of ease of use and cost-effectiveness. However, according to a variant not illustrated, the distal pushing element may be a separate element fixed to the screw.

According to the illustrated example (figure 1), the screw 30 comprises a shank 33 having a rotation axis X". The shank 33 is divided into: a threaded portion 34, a head portion 35, and an intermediate portion 36, which is interposed along the rotation axis between the head portion 35 and the threaded portion 34.

The proximal pushing element 31 and the distal pushing element 32 are integral with the shank 33 and are spaced apart along the rotation axis X".

The proximal pushing element 31 is interposed between the head portion 35 and the intermediate portion 36. According to the illustrated example, the proximal pushing element 31 is an annular body, in particular a ring (for example a circlip), fitted on the shank 33 of the screw 30. In particular, the shank 33 has an external annular seat 37 and the proximal pushing element 31 is housed at the seat 37. Advantageously, the proximal pushing element 31 is made of elastically deformable material, advantageously soft, for example of polymeric material. In this way, the assembling and, possibly, disassembling operations are simplified and the weights and costs of the system 1 are reduced.

According to the illustrated example, the distal pushing element 32 is a portion of the shank 33 interposed along the rotation axis X" between the intermediate portion 36 and the threaded portion 34. The distal pushing element 32 has a larger section than the intermediate portion 36. The section of the distal pushing element 32 is complementary to the distal portion 19III of the abutment 3. Advantageously, the head portion 35 and the intermediate portion 36 of the screw 30 have a section of smaller dimensions than the section of the central portion 19II of the abutment 3. In other words, the head portion 35 and the intermediate portion 36 are configured to be able to cross the central portion 19II of the abutment 3.

The shank 33 further comprises an end portion 38, which protrudes along the rotation axis X" from the threaded portion 34.

The head portion 35 of the screw 30 is a semi-spherical protrusion. Also, the head portion 35 has a plurality of grooves 39 and teeth 40 evenly distributed around the head portion 35. According to the illustrated example, each groove 39 is interposed between two teeth 40 adjacent to each other. The teeth 40 and the grooves 39 develop radially starting from the rotation axis X".

The system 1 further comprises a screwdriver 50 having a longitudinal axis Y. The screwdriver 50 has, at an end 51, a cavity 52 that is configured to accommodate, at least partially, the head portion 35 of the screw 30. The cavity 52 is configured to form a shape and/or interference coupling with the head portion 35 of the screw. The cavity 52 has a plurality of teeth 53.

In use, the implant 2 is surgically inserted within the mandibular or maxillary bone B of the patient.

Then, in order to fix the prosthesis, a pre-assembly of the abutment 3 and the connecting unit 4 is carried out. It is noted that according to the example illustrated, the distal pushing element 32 is integral with the shank 33 of the screw 30. In the event that the distal pushing element 32 is a separate component, it is provided to fix the distal pushing element to the shank.

During the pre-assembly step, the screw 30 is inserted into the hole 19 of the abutment 3 by passing the head portion 35 through the distal opening 24 and the central portion 19II of the abutment 3, so as to arrange the distal pushing element 32 in contact with the distal strike surface 20II of the abutment 3. In this way, the head portion 35 of the screw 30 is accessible through the proximal opening 23 and the mouth 18 of the abutment 3.

Then, the proximal pushing element 31 is fixed to the screw 30. According to the illustrated example, the proximal pushing element 31 is a ring of elastic material that is fitted on the shank 33 of the screw and interlockingly positioned at the seat 37. In this way, the proximal pushing element 31 translates integrally with the shank 33 of the screw 30 along the rotation axis X". The crown 5 is fixed on the abutment 3. It is noted that, in a known manner, the crown 5 has an access hole 60, which can be angled with respect to the longitudinal axis X of the implant 2. The position of the access hole 60 is studied according to the individual applications and is determined so that it opens on the abutment 3 at the mouth 18 of the collar 15. In this way there is more maneuvering space to be able to hook the screwdriver 50 to the head portion 35 of the screw 30. In this way, a prosthesis 70 is formed which can be selectively screwed or removed from the implant 2.

In order to fix the prosthesis 70 to the implant 2 the threaded portion 34 (and the end portion 38 if present) of the screw 30 is inserted into the screwing portion 11 of the implant 2 itself. In doing so, it also inserts:
- the shape coupling member 14I within the shape coupling portion 10I of the implant 2;
   - the interference coupling member 14II within the interference coupling portion 10II of the implant 2.

At this step, the prosthesis 70 is partially housed inside the cavity 7 of the implant 2, and the rotation axis X" of the screw 30 and the longitudinal axis X' are substantially coaxial to the longitudinal axis X of the cavity 7 (Figure 1).

By inserting the end 51 of the screwdriver 50 through the access hole 60 of the crown 5, the dentist can insert the head portion 35 of the screw 30 into the cavity 52. Inserting the teeth 53 of the screwdriver 50 into the grooves 39 of the head portion 35 of the screw 30 a coupling capable of transferring the rotation of the screwdriver 50 to the screw 30 is created. Advantageously, the particular shape of the end 51 of the screwdriver 50 and of the head portion 35 of the screw 30 allows the screw 30 to be screwed or unscrewed even if there is a significant inclination, for example greater than 20°, between the longitudinal axis X" of the screw 30 and the longitudinal axis Y of the screwdriver 50 (Figure 1). This advantageously allows the system 1 for oral implantology according to the present invention to be used also with access holes 60 angled towards the inside of the oral cavity, i.e., in hidden positions, with reduced visual impact and with reduced access spaces.

By rotating the screw 30 by means of the screwdriver 50 in a direction of rotation v1 (for example a clockwise rotation), the axial advancement of the screw 30 itself is obtained in the direction d1 under the action of screwing the threaded portion 34 into the screwing portion 11 of the implant 2.

By translating in the direction d1, the screw 30 also translates the proximal pushing element 31 against the proximal strike surface 20I of the abutment 3. As the screwing operation continues in the direction of rotation v1, the proximal pushing element 31 pushes the abutment 3 within the implant and, specifically, applies a preload sufficient to create the determined coupling between the interference coupling member 14II of the abutment and the interference coupling portion 10II of the implant 2.

Figure 2 illustrates the system 1 for implantology according to the present invention with the screw 30 fully screwed to the implant. In this configuration the prosthesis 70 is firmly fixed to the implant 2 and the dentist can remove the screwdriver 50 and proceed with closing the access hole 60, for example with composite material.

Advantageously, the threaded portion 34 of the screw 30 has an extension 1, along said rotation axis X" greater than the maximum distance dmax between the distal pushing element 32 of the screw 30 and the distal strike surface 20II of the abutment 3 when the screw 30 is completely screwed to the respective screwing portion 11 of the implant 2.

Figure 3 illustrates the system 1 for implantology according to the present invention during a removal step.

By rotating the screw 30 by means of the screwdriver 50 in a direction of rotation v2 (for example an anti-clockwise rotation), opposite to the rotation v1, the axial advancement of the screw 30 itself is obtained in the direction d2, opposite to the direction d1, under the action of unscrewing the threaded portion 34 from the screwing portion 11 of the implant 2.

By translating in the direction d2, the screw 30 pushes the distal pushing element 32 against the distal strike surface 20II of the abutment 3. As the unscrewing operation continues in the direction of rotation v2, the proximal pushing element 32 forces the abutment 3 pushing it out of the implant 2.

Figure 3 illustrates the system 1 for implantology according to the present invention with the screw 30 during the unscrewing operation from the implant 2. In this way, the prosthesis 70 is released from the implant 2.

Advantageously, the system 1 for implantology according to the present invention allows to remove the prosthesis 70 using the same screwdriver 50 used to fix the prosthesis to the implant 2.

Advantageously, the system 1 for implantology of the above-described type allows to use screwdrivers 50 of extremely small dimensions and, therefore, to operate also in case of access holes 60 angled towards the inside of the oral cavity.

Advantageously, the fact that the pushing element 31 is made of a soft, elastic material, i.e., not of metal material, facilitates the operations of assembling or disassembling the pushing element 31 itself.

Advantageously, the pushing element 31 increases the pushing area between the screw 30 and the abutment 3. This allows to increase the resulting force to obtain the conical coupling during the screwing step and ensures uniformity in the distribution of the load over the entire abutment 3, ensuring a correct clamping between the abutment 3 and the implant 2.

Advantageously, the fact that the distal pushing element 32 is integral with the shank 33 of the screw 30, in particular is a single piece with the shank 33 of the screw 30, allows the screw 30 to be used both as a fixing component of the prosthesis 70 and as an extracting component. This is an evident advantage over known solutions where the extraction tools are different from those for performing the implant.

Advantageously, the particular hemispherical shape of the head portion 35 of the screw 30 allows, with the same torque transmissible for rotation by the screwdriver 50, to significantly reduce the radial dimensions of the head portion 35 itself. In other words, the screw 30 according to the present invention has a head portion 35 of extremely small dimensions. This allows the head portion 35 itself to be inserted through the central portion 19II of the abutment 3 to make the shoulder connection between the distal pushing element 32 and the distal strike surface 20II. Further, the screwdriver 50 having the cavity 52 at the screwing end has the advantage of being extremely compact and handy. Furthermore, the screw 30-screwdriver 50 system according to the present invention ensures a stable and precise grip during use at any mutual angle.

Advantageously, the system 1 according to the present invention has a screw 30 of extremely reduced width, this guarantees a correct clamping substantially in any condition of use.

## Claims

1. A system for oral implantology comprising: an implant (2) which is integrated, in use, within a mandibular or maxillary bone of a patient; an abutment (3); and a connecting unit (4);
- wherein the implant (2) and the abutment (3) are configured to generate a conical coupling;
- wherein said connecting unit (4) interconnects the implant (2) and the abutment (3); said connecting unit (4) comprising a screw (30), which is rotatable around a rotation axis (X") and is configured to:
- push said abutment (3) in a first direction of translation (d1), so as to clamp the conical coupling between the abutment (3) and the implant (2), rotating in a first direction of rotation (v1); and
- push said abutment (3) in a second direction of translation (d2), in particular opposite to said first direction of translation (d1) so as to free the abutment (3) and the implant (2) from the conical coupling, rotating in a second direction of rotation (v2).

2. A system for oral implantology according to claim 1, wherein said screw (30) comprises a shank (33) having a threaded portion (34), a head portion (35) and an intermediate portion (36), which is interposed along said rotation axis (X") between the head portion (35) and the threaded portion (34);
- said abutment (3) having a through hole (19) and being fitted on said screw (30); said screw (30) and said abutment (3) being reciprocally movable along said rotation axis (X");
- the connecting unit (4) comprising a first pushing element (31) and a second pushing element (32) which are integral with the screw (30) and are spaced apart along said rotation axis (X"); said abutment having a first strike surface (20I) facing said first pushing element (31) and, respectively, a second strike surface (20II) facing said second pushing element (32);
- wherein said first pushing element (31) pushes, in use, against said first strike surface (20I) when the screw (30) translates in a first direction of translation (d1) so as to fix said implant (2) and said abutment (3) with each other;
- wherein said second pushing element (32) pushes, in use, against said second strike surface (20II) when the screw (30) slides in a second direction of translation (d2) so as to free said abutment (3) and said implant (2) from the coupling.

3. A system for oral implantology according to claim 2, wherein said hole (19) of the abutment (3) communicates with the external environment through a distal opening (24) and a proximal opening (23); the head portion (35) of the screw (30) being accessible through the proximal opening (23) of the abutment (3) and the threaded portion (34) protruding outside from the distal opening (24).

4. A system for oral implantology according to claim 2 or 3, wherein the threaded portion (34) of the screw (30) is configured to be screwed, in use, in a respective screwing portion (11) of the implant (2); wherein, the threaded portion (34) of the screw (30) has an extension (1), along said rotation axis (X"), greater than the maximal distance (dmax) between the second pushing element (32) of the screw (30) and the second strike surface (20II) of the abutment (3) when the screw (30) is completely screwed to the respective screwing portion (11) of the implant (2).

5. A system for oral implantology according to any one from claim 2 to 4, wherein said first pushing element (31) is an annular body, in particular a ring, for example a circlip; in particular, said first pushing element (31) is made of polymeric material.

6. A system for oral implantology according to any one of the preceding claims, wherein the implant (2) has a cavity (7) which faces the outside through a proximal mouth (8); wherein the cavity (7) of the implant (2) has, along a first longitudinal axis (X), a portion of interference coupling (10II), in particular conical interference, and a screwing portion (11);
- wherein said portion of interference coupling (10II) is interposed along the first longitudinal axis (X) between the screwing portion (11) and the proximal mouth (8); wherein said portion of interference coupling (10II) is laterally delimited by a first lateral surface (12) which is inclined to said first longitudinal axis (X);
- wherein said abutment (3) has a second longitudinal axis (X') coaxial, in use, to said first longitudinal axis (X), and comprises an interlocking element (14II), in particular of the conical interference type, which protrudes radially outside from the abutment (3) itself;
- said interlocking element (14II) has, in turn, a second lateral surface (22), which protrudes radially outside from the abutment (3) and is inclined to said second longitudinal axis (X');
- wherein said abutment (3) is inserted, in use, at least partially, into the cavity (7) of the implant (2), so that the first lateral surface (12) of the implant (2) is in contact with the second lateral surface (22) of the interlocking element (14II) of the abutment (3) to generate a conical coupling.

7. A system for oral implantology according to claim 6, wherein said cavity (7) of the implant (2) has a shape coupling portion (101); wherein said abutment (3) comprises a shape interlocking element (141), which is inserted, at least partially, within the shape coupling portion (10I) so as to generate a shape coupling, in particular said shape coupling portion (10I) and said shape interlocking element (14I) have an hexagonal section.

8. A system for oral implantology according to any one from claim 2 to 7, wherein the head portion (35) of the screw (30) has a semi-spherical shape and has a plurality of grooves (39) and teeth (40) evenly distributed around said rotation axis (X"); wherein each tooth (40) is interposed between two adjacent grooves (39).

9. A system for oral implantology according to claim 8 and comprising a screwdriver (50) having a coupling end (51) with said screw (30); wherein said coupling end (51) has a cavity (52) which is configured to be coupled, in use, with the head portion (35) of the screw (30).

10. A system for oral implantology according to claim 9, wherein said cavity (52) has a plurality of teeth (53) evenly distributed around a third longitudinal axis (Y) of the screwdriver (50); wherein each tooth (53) is configured to be coupled with a respective groove (39) of the screw (30) even if the rotation axis (X") is incident to said third longitudinal axis (Y).
